# FASCICULE DE BREVET EUROPEEN

(11) **EP 2 059 904 B1**
(45) Date de publication et mention de la délivrance du brevet: **05.09.2012**
(21) Numéro de dépôt: 07823657.7
(22) Date de dépôt: 27.07.2007
(51) Int. Cl.: G06T 7/00

(54) **PROCEDE D'IMAGERIE INFORMATISE PERMETTANT UNE RECONSTRUCTION TRIDIMENSIONNELLE A PARTIR D'IMAGES RADIOGRAPHIQUES BIDIMENSIONNELLES; DISPOSITIF DE MISE EN OEUVRE**
COMPUTERGESTÜTZTES BILDAUFNAHMEVERFAHREN ZUR DREIDIMENSIONALEN REKONSTRUKTION AUS ZWEIDIMENSIONALEN RADIOLOGISCHEN BILDERN UND VORRICHTUNG ZU DESSEN AUSFÜHRUNG
COMPUTERIZED IMAGING METHOD FOR A THREE - DIMENSIONAL RECONSTRUCTION FROM TWO - DIMENSIONAL RADIOLOGICAL IMAGES;IMPLEMENTATION DEVICE

(30) Priorité: 27.07.2006 FR 0606915
(43) Date de publication de la demande: 20.05.2009
(73) Titulaire: Axs Ingenierie, 76600 Le Havre (FR)
(72) Inventeur: BLANCHARD, Bertrand, F-33000 Bordeaux (FR); ELBAROUDI, Fouad, F-33600 Pessac (FR)
(74) Mandataire: Michelet, Alain
(86) Numéro de dépôt international: PCT/FR2007/051742
(87) Numéro de publication internationale: WO 2008/012479

(56) Documents cités:
- US-A1- 2003 113 006
- MARCIL B ET AL: "Incorporation of patient displacement into a trunk reconstruction technique" ENGINEERING IN MEDICINE AND BIOLOGY SOCIETY, 1995., IEEE 17TH ANNUAL CONFERENCE MONTREAL, QUE., CANADA 20-23 SEPT. 1995, NEW YORK, NY, USA,IEEE, US, vol. 1, 20 septembre 1995 (1995-09-20), pages 385-386, XP010215421 ISBN: 0-7803-2475-7
- JAREMKO J L ET AL: "Indices of torso asymmetry related to spinal deformity in scoliosis" CLINICAL BIOMECHANICS, BUTTERWORTH SCIENTIFIC LTD, GUILDFORD, GB, vol. 17, no. 8, octobre 2002 (2002-10), pages 559-568, XP004380899 ISSN: 0268-0033

## Description

La présente invention concerne un procédé de traitement d'images radiologiques, par rayons X, informatisé permettant une reconstruction tridimensionnelle à partir d'images bidimensionnelles ainsi qu'un dispositif de mise en oeuvre. Elle a des applications dans le domaine de la radiologie.

On connaît des systèmes d'imagerie radiologique, tels que des systèmes scanners ou IRM, qui permettent d'obtenir, après reconstruction, des images tridimensionnelles de toutes les parties d'un patient, aussi bien des os que des tissus environnants. Ces systèmes, comme le tomodensitomètre, permettent d'obtenir des images radiologiques d'une grande finesse dans les trois dimensions, mais sont toutefois d'un coût très important et d'une mise en oeuvre relativement lourde, sans compter la dose importante de rayonnement reçue par le patient. Or, pour certains types d'examen, notamment ceux concernant des structures osseuses qui, parmi les éléments du corps, sont celles qui sont le mieux visualisables en radiologie, il n'y a pas besoin d'une telle finesse. C'est notamment le cas pour les problèmes de posture, et tous les problèmes liés à la colonne vertébrale en général. Il peut être alors intéressant d'utiliser des appareils de radiologie classiques produisant des images en deux dimensions (2D) et de reconstituer des images en trois dimensions (3D) à partir de plusieurs images en deux dimensions prises selon des orientations ou incidences différentes. Avantageusement, ces acquisitions 2D peuvent être faites alors que le patient est en position debout, et ceci contrairement aux dispositifs mettant en oeuvre des procédés de reconstruction 3D de l'art antérieur qui nécessitent que le patient soit couché. Une telle approche permettrait de rendre accessible au plus grand nombre et à un coût raisonnable des examens de ce type. Toutefois, lorsque l'on réalise plusieurs clichés selon des orientations ou incidences différentes, sauf à utiliser plusieurs sources X pour faire des images synchrones, le patient peut s'être déformé, ce qui dégrade la reconstitution 3D.

En effet, pour obtenir une reconstruction 3D, il est nécessaire d'avoir deux vues d'une même zone à examiner sous des incidences différentes. Ces deux vues doivent répondre aux deux critères suivants : D'une part, le patient ne doit pas se déformer entre les deux vues ; et, d'autre part, il doit être possible de remonter à la position relative des sources des deux vues par rapport à l'objet. Si ces deux conditions sont remplies, on considère que le calibrage de l'espace est assuré.

Classiquement, dans le cas de protocoles d'acquisitions de clichés radiographiques traditionnels, ces deux conditions ne sont pas respectées car les prises de radiographie avec des incidences différentes sont réalisées successivement. Or, entre deux vues, le patient respire ou change de posture. Il en résulte une déformation du patient et donc une non correspondance des structures du patient entre les deux vues. De plus, l'image radiographique ne possède pas de notion de profondeur comme une photographie classique. Il n'est donc pas possible de s'appuyer sur la perspective pour identifier la position relative des deux acquisitions. Il est donc très difficile d'envisager une détermination du positionnement relatif des deux acquisitions dans un référentiel commun en se basant uniquement sur l'information des radiographies.

Pour résoudre ces difficultés, il a été proposé dans WO 03/099124 un appareillage mécanique permettant de garantir la non déformation du patient radiographié lors de son déplacement par rapport à une source X. Il y est mis en oeuvre un plateau porte patient orientable en rotation avec une armature d'immobilisation du patient et des repères radio-opaques. Cependant cet appareillage nécessite un matériel relativement encombrant dans le cadre d'une utilisation systématique en routine clinique et il nécessite également un local radiographique adéquat (plus grand que pour une utilisation traditionnelle) et il n'est donc pas adaptable à tout poste radiologique.

Il a également été proposé dans le document WO 04/111948 la mise en oeuvre de deux sources de rayons X distinctes ayant un positionnement respectif prédéfini pour réaliser des clichés synchrones. Un tel système ne se base donc pas sur des équipements standard de radiologie puisque ces derniers ne possèdent qu'une seule source de rayons X. Un tel système nécessite donc un investissement supplémentaire en appareil radiologique.

On connaît par US-2003/113006 un procédé de reconstitution optique de la géométrie radiographique.

Enfin, dans la demande PCT/FR2003/003943 (WO2004/061721), il a été décrit un procédé de simulation biomécanique pour l'aide à la chirurgie mettant en oeuvre une étape dans laquelle il est effectué un recalage entre des images radiologiques internes et des données d'acquisition externes.

La présente invention propose l'utilisation d'un matériel radiologique classique et met en oeuvre une détermination des déplacements et des déformations du sujet radiographié entre deux acquisitions selon des orientations différentes de manière à corriger les déformations directement sur l'interprétation des données radiologiques. Une telle approche se démarque des solutions précédentes dans la mesure où elle ne cherche pas à contraindre les déplacements et à éviter les déformations de l'objet entre les deux acquisitions.

Ainsi, l'invention concerne un procédé d'imagerie radiologique informatisé permettant une reconstruction tridimensionnelle à partir d'images radiologiques bidimensionnelles d'une zone d'intérêt, dans lequel deux images radiologiques bidimensionnelles d'un sujet sont acquises par un moyen de radiographie couplé à un équipement informatique, les images radiologiques étant prises successivement selon des incidences différentes par rapport au sujet, le sujet ayant pu se déformer entre les acquisitions d'images radiologiques.

Selon l'invention :
- on dispose sur la surface du sujet en relation avec la zone d'intérêt un ensemble de repères de surface détectables par un capteur de surface indépendant du moyen radiographique permettant d'acquérir dans l'équipement informatique des images de surface tridimensionnelles ou 3D de la surface du sujet, les repères de surface étant radio-opaques pour être visibles sur les images radiologiques acquises et le capteur de surface pouvant être totalement indépendant du moyen radiographique,
- on associe à chaque image radiologique acquise une image de surface correspondante acquise au même instant ou quasi au même instant afin que le sujet n'ait pas le temps de bouger ou de se déformer,
- on met en oeuvre un processus itératif comportant une phase de calcul d'incidence et une phase de calcul de déformation,
la phase de calcul d'incidence étant destinée à déterminer les positions relatives des images radiologiques et des images de surface ainsi qu'à effectuer un positionnement spatial dans les trois dimensions des images radiologiques en supposant une absence de déformation du sujet,
la phase de calcul de déformation étant destinée à déterminer et corriger sur les images radiologiques les déformations du sujet pour les positions relatives déterminées dans la phase de calcul d'incidence,
et le critère d'arrêt de l'itération est basé sur l'écart entre les coordonnées 3D de mêmes repères entre deux itérations successives, c'est à dire une itération précédente i-1 et une itération courante i, les coordonnées 3D courantes des repères d'une itération courante i étant calculées à partir de la détermination d'un gradient de déformation obtenu à partir des deux images de surface acquises, l'application de ce gradient aux images radiologiques de l'itération précédente i-1 pour obtenir des images radiologiques corrigées courantes i puis un calcul des nouvelles coordonnées 3D courantes des repères à partir des images radiologiques corrigées courantes i, les positions des repères de l'itération précédente i-1 correspondant aux positions des repères sur les images de surface acquises initialement, et dans le cas d'une première itération, les images radiologiques de l'itération précédente correspondant aux images radiologiques acquises.

Dans divers modes de mise en oeuvre du procédé selon l'invention, les moyens suivants, pouvant être utilisés seuls ou selon toutes les combinaisons techniquement possibles, sont employés :
- lorsque la position relative du moyen de radiographie par rapport au capteur de surface n'est pas connue à priori, on détermine la position relative du moyen de radiologie par rapport au capteur de surface par projection dans le plan des images radiologiques des coordonnées 3D des repères obtenus sur les images de surface et comparaison avec les coordonnées réelles desdits mêmes repères radio-opaques sur les images radiologiques ;
- le capteur de surface peut être un capteur optique du type franges de Moiré permettant un calcul de relief à partir de projection de lumière structurée (motifs) sur la surface étudiée, ou un capteur par palpation de la surface dans la mesure où le sujet ne peut pas bouger entre l'acquisition radio et l'acquisition optique de surface ;
- Lors de la correction des images radiologiques, on projette sur le plan de l'image radiologique les lignes de contour de surface de chacune des deux images de surface, l'écart entre lignes de contours projetées donnant le gradient de déformation ;
- On dispose un repère de surface qui possède deux longueurs graduées ;
- Lorsque la zone d'intérêt est le rachis, on dispose un repère de surface en haut du rachis ;
- On dispose au moins trois repères sur la surface comportant au moins une information de dimension comme une règle graduée radio visible;
- lorsque la zone d'intérêt est le rachis, on dispose un repère de surface vers le haut du rachis et possédant deux longueurs graduées radio-visible, on obtient des images radiologiques selon deux incidences différentes, de préférence, face et profil du sujet,
- le moyen de radiographie restant fixe, on déplace en rotation le sujet pour obtenir les différentes incidences ;
- le sujet restant fixe, on déplace le moyen de radiographie autour du sujet ;.
- Le dispositif comporte des moyens permettant d'obtenir le relief externe de la partie radiographiée recalé dans l'espace par rapport au plan radiographique ;
- le procédé peut être étendu à plus de deux incidences d'images radiologiques.

L'invention concerne également un dispositif d'imagerie informatisé permettant une reconstruction tridimensionnelle à partir d'images radiologiques bidimensionnelles d'une zone d'intérêt, dans lequel deux images radiologiques bidimensionnelles d'un sujet sont acquises par un moyen de radiographie couplé à un équipement informatique, les images radiologiques étant prises successivement selon des incidences différentes par rapport au sujet, le sujet ayant pu se déformer entre deux acquisitions successives, le dispositif comportant des moyens permettant l'exécution du procédé selon l'une ou plusieurs des caractéristiques précédemment listées.

Le procédé de l'invention permet donc la détermination d'un espace 3D issu d'informations radiographiques, à partir de conditions de prises de vues radiographiques non stéréo-correspondantes. Il ne nécessite qu'une seule source radiographique conventionnelle pour réaliser la reconstruction stéréo-correspondante. Il ne nécessite pas de connaître précisément l'incidence entre les deux prises de vues radiographiques pour permettre la reconstruction stéréo-correspondante. De plus, il supporte les déformations du sujet entre les différentes prises de vues radiographiques sans altérer la correspondance entre les radiographies pour la reconstruction 3D. Le procédé est relativement simple à mettre en oeuvre pour accéder à l'exploitation 3D de radiographies conventionnelles contrairement aux autres méthodes qui supposent un matériel encombrant et un protocole lourd à mettre en place. Il peut être appliqué à tout système radiographique numérique sans nécessiter de modifications conséquentes du matériel et il n'allonge pas, ou très faiblement, les temps d'acquisitions de données, tout en apportant un avantage important en terme de diagnostic, puisque qu'il donne accès au 3D à partir d'un matériel radiographique conventionnel. Le procédé n'entraîne pas d'irradiation supplémentaire du patient contrairement aux systèmes du type tomodensitomètre ou autres donnant directement des données en 3D. Enfin, il permet de corréler avec précision les diagnostics externe et interne en disposant simultanément de radiographies et de données de surface du sujet repositionnées dans le même espace.

La présente invention va maintenant être décrite en détail par un mode de réalisation particulier, qui a pour but d'illustrer l'invention sans la limiter, en relation avec les figures suivantes :
- la Figure 1 représente schématiquement la calibration de deux clichés d'images radiologiques réalisées selon deux incidences différentes, en parallèle avec la prise d'images de surface (ou externe) d'un sujet,
- la Figure 2 représente schématiquement l'interrelation entre les opérations de recalage et de comparaison destinées au calibrage des images radiologiques, en utilisant les images radiologiques et les images de surface correspondantes,
- la Figure 3 représente un organigramme du procédé récursif de calibration des images radiologiques avec une phase de calcul d'incidence et une phase de calcul de déformation,
- les Figures 4, 5 et 6 représentent schématiquement trois modalités pour le recalage, ou positionnement relatif, de la source radio et du capteur de surface,
- la Figure 7 représente la détermination de la position relative des deux images de surface en utilisant des repères de surface (cutanés) puis le repositionnement dans un même référentiel 3D desdites images de surface, et
- la Figure 8 représente la correction de déformation entre les images radiologiques par transposition d'informations des images de surface, lignes de surface en l'occurrence, dans l'espace des images radiologiques pour l'application d'un gradient de correction sur l'image radiologique.

On va maintenant détailler l'invention qui est mise en oeuvre, pour l'acquisition du rachis en 3 dimensions, par un équipement informatique comportant des moyens d'exécution d'un programme informatique sur des données, des moyens d'entrées/sorties, notamment pour la visualisation et/ou l'impression de résultats, ainsi que d'un imageur (temps réel ou non), pour capturer d'une part des images radiologiques sous forme de données numériques radiologiques et, d'autre part, des images 3D de la surface d'un sujet radiographié également sous forme de données numériques de surface. La capture des images 3D est effectuée par un capteur de surface 3D qui est un capteur de surface, par exemple du type franges de Moiré. Les données traitées sont généralement sous forme matricielle (2D ou 3D selon le cas) dans des mémoires de l'équipement informatique. L'équipement informatique est programmé selon un algorithme dans un langage de programmation.

Le procédé utilise conjointement des images radiologiques et des images 3D de surface d'un sujet radiographié. On dispose sur le sujet au moins deux repères visibles à la fois par le capteur de surface et par l'imageur radiographique. Les repères sont positionnés sur la surface du sujet dans des zones en relation avec la structure à analyser, le rachis en l'espèce. Ainsi, on peut disposer trois repères le long du rachis, par exemple un repère vers le haut du rachis, un repère vers le bas du rachis et un troisième repère gradué du type réglette radio visible, hors du rachis qui permet de disposer d'une échelle sur les vues finales.

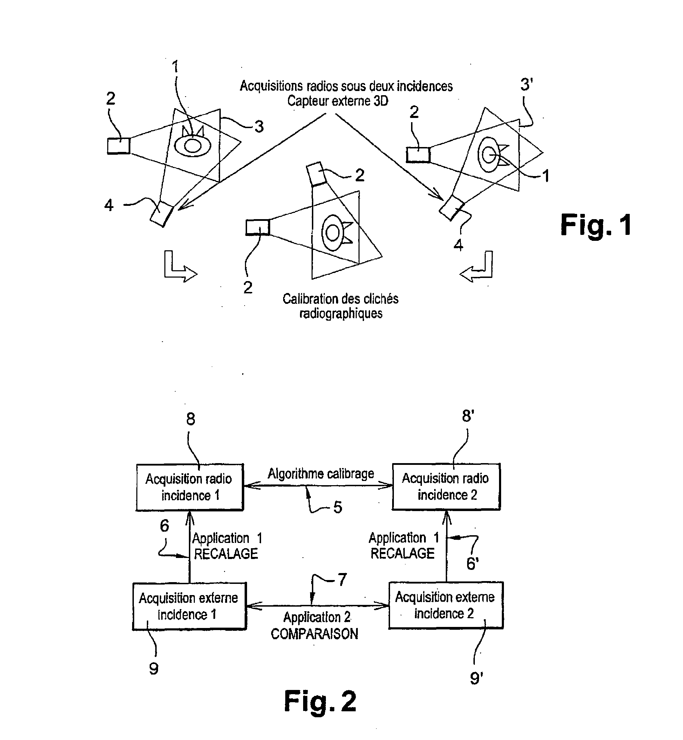

Sur la Figure 1, un capteur de surface 4, produisant des images en trois dimensions de la surface du sujet, est utilisé en parallèle de l'acquisition d'images radiographiques en deux dimensions grâce à une source de rayons X 2 selon une première incidence 3 et selon une seconde incidence 3'. Pour chaque incidence radiologique, on a une image de surface 3D associée à une image radiologique à ladite incidence. Des repères cutanés, visibles sur les images de surface 3D et également radio-opaques et donc visibles sur les radiographies 2D, sont placés sur le sujet radiographié. On profite du fait que les structures osseuses intéressantes, notamment le rachis, sont proches de la surface du sujet et que leurs déformations suivent sensiblement celles de la surface voisine. Le capteur de surface 3D enregistre la surface de la zone d'intérêt qui est simultanément (ou quasi-simultanément) radiographiée et, ceci, pour deux incidences différentes. Ces deux incidences sont obtenues soit à la suite du déplacement (rotation en l'espèce) du sujet radiographié, soit à la suite des déplacements de la source radio X et du capteur de surface. Quatre images sur lesquelles des repères sont visibles sont obtenues : une première image de surface du corps du sujet selon une première incidence de capteur par rapport au sujet (par exemple oblique de dos vers la droite), une seconde image de surface du corps du sujet selon une seconde incidence de capteur par rapport au sujet (par exemple oblique de dos vers la gauche), une première image radiologique selon une première incidence radio par rapport au sujet (par exemple de profil) et une seconde image radiologique selon une seconde incidence radio par rapport au sujet (par exemple de dos). Les premières images de surface et radiologique sont réalisées au même instant ou quasi au même instant afin que le sujet n'ait pas le temps de bouger ou de se déformer. Les secondes images de surface et radiologique sont réalisées au même instant ou quasi au même instant afin que le sujet n'ait pas non plus le temps de bouger ou de se déformer. Entre temps on aura soit tourné le sujet par rapport à la source X et au capteur de surface, soit tourné le capteur de surface et la source X par rapport au sujet.

On comprend qu'il est préférable qu'un certain nombre de mêmes repères soient visibles sur les deux images de surface. En conséquence, la rotation entre les prises d'images de surface devra être limitée. En fonction du nombre de repères mis en oeuvre sur le sujet, on pourra en « perdre » quelques-uns entre les deux images de surface, au moins trois mêmes repères, visibles sur les images radiographiques, devant être retrouvés sur les images de surfaces. Ce problème ne se pose pas avec la même acuité pour les images radiologiques (sauf contraste radio trop poussé, un repère étant « perdu » sur une masse osseuse). On comprend également que les repères sont préférentiellement disposés en fonction de la zone d'intérêt. On comprend également qu'il peut être utile de mettre en oeuvre des repères chacun de forme différente (ou comportant un signe spécifique visible en radio et sur les images de surface, de préférence automatiquement reconnaissables par l'équipement informatique) afin de faciliter l'association entre un même repère (signe) sur des images différentes en incidence, sur les radiographies et les images de surface.

Comme représenté sur la Figure 2, un calibrage 5 des images radiologiques entre-elles est mis en oeuvre grâce à deux opérations interdépendantes selon un processus itératif : un recalage 6 et une comparaison 7.

La première opération est un recalage 6 entre l'image de surface 9 (acquisition de surface par le capteur de surface 4) et l'image radiologique 8 correspondante (faite au même/quasi même instant), sous la première incidence radio, et un recalage 6' entre l'image de surface 9' (acquisition de surface par le capteur de surface 4) et l'image radiologique 8' correspondante sous la seconde incidence radio. Cette opération se base sur les repères de surface également visibles sur l'image radiologique. A partir de ces repères exprimés simultanément dans l'espace du capteur de surface et dans les espaces de radiographie, l'opération de recalage permet de positionner les radiographies par rapport aux images de surface. On peut noter qu'une opération de recalage est mise en oeuvre dans la demande PCT/FR03/03943.

La seconde opération consiste en une comparaison 7 entre deux images de surface prises en relation avec des incidences de capteur différentes afin, d'une part, d'extraire les informations d'une possible déformation du sujet entre les deux acquisitions et, d'autre part, d'extraire les informations du positionnement relatif (différence entre les première et seconde incidences de capteurs) du capteur de surface entre les deux prises d'images de surface.

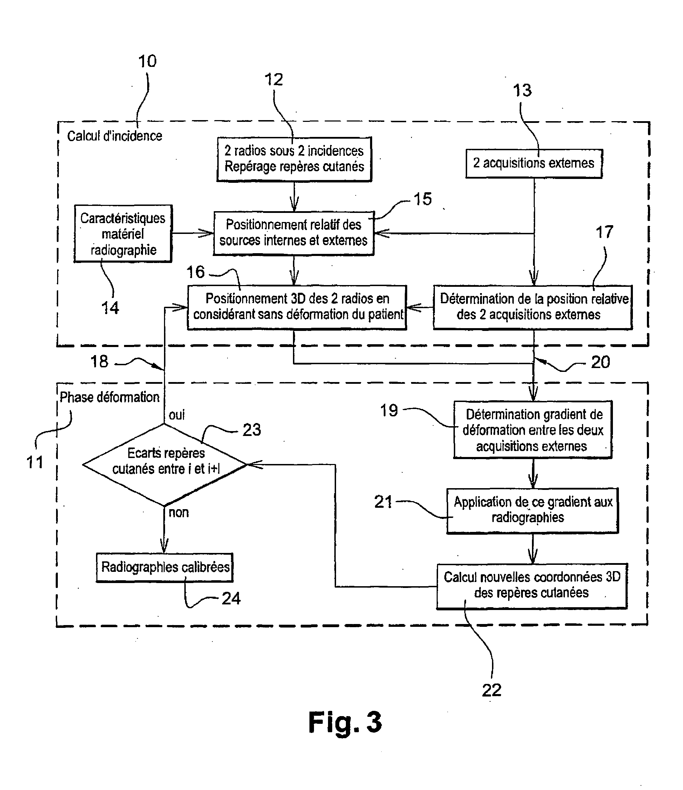

Comme représenté sur la figure 2, ces deux opérations sont interdépendantes : le traitement de la déformation du sujet entre les deux acquisitions de surface joue sur la position des repères cutanées et interfère donc sur l'opération de recalage. Un procédé itératif de calibration représenté sur la figure 3 sous forme d'un organigramme est mis en oeuvre pour réaliser ces opérations. Ce procédé comporte deux phases : une phase de calcul d'incidence 10 et une phase de calcul de déformation 11.

Dans une première phase de calcul d'incidence 10, on considère que le sujet n'a pas subi de déformation entre les deux acquisitions radiographiques. On détermine alors (bloc 15) les positions relatives de la source radio X 2 et du capteur de surface 4 pour les deux incidences radio à partir :
- des caractéristiques sur le matériel radiographique (bloc 14),
- des deux images radiologiques avec leurs repères radio-opaques et sous les deux incidences radio (bloc 12) et
- des deux images de surface correspondantes (bloc 13) qui permettent la détermination (bloc 17) de la position relative des images de surface. A partir de ce positionnement relatif, obtenu en sortie du bloc 15, on peut calculer le positionnement 3D des deux images radiographiques qui sont considérées sans déformation du sujet. On peut noter que, dans le processus récursif, lors d'une itération ultérieure, on utilisera des images radiologiques corrigées d'une éventuelle déformation.

Dans une seconde phase de calcul de déformation 11, on vient corriger les radiographies par déformation en sens inverse des éventuelles déformations évaluées lors de l'opération de comparaison des images de surface. On entend par radiographie corrigée, la modification de l'interprétation des radiographies en prenant en compte les mouvements éventuels du sujet entre une radiographie en conditions de stéréographie stricte et la radiographie réellement prise. A partir de ces radiographies corrigées (déformées en inverse), on calcule, dans le référentiel de surface, les nouvelles coordonnées des repères de surface (on effectue en quelque sorte une transposition des repères de l'espace interne/radio vers l'espace externe/de surface). A cette fin, on détermine (bloc 19) un gradient de déformation entre les images de surface, on applique (bloc 21) ce gradient aux radiographies, puis on calcule (bloc 22) à partir de ces radiographies les nouvelles coordonnées des repères de surface. Ensuite, on compare (bloc 23) ces nouvelles coordonnées à celles correspondant à la position initiale des repères (c'est à dire la position 3D des repères sur l'image de surface acquise) avec un calcul d'écart. Cette comparaison permet de fixer un critère d'arrêt de l'itération. Lorsque l'écart devient inférieur ou égal à un seuil d'arrêt, alors les radiographies sur lesquelles on a appliqué le gradient sont calibrées (bloc 24). Par contre tant que l'écart reste significatif (supérieur au seuil d'arrêt) on reboucle (bloc 18) sur le calcul d'incidence (10) en utilisant les résultats obtenus (images radiologiques corrigées), ce qui va produire un nouveau positionnement 3D (bloc 16) des images radiographiques pour une utilisation (bloc 20) dans la phase de déformation 11. Ainsi, par ce processus itératif, on évalue et corrige l'impact de la déformation du sujet sur les conditions de stéréo-correspondances.

On va maintenant détailler la première phase de calcul d'incidence qui comporte deux temps, un premier temps avec une opération de recalage et un second temps avec une opération de comparaison.

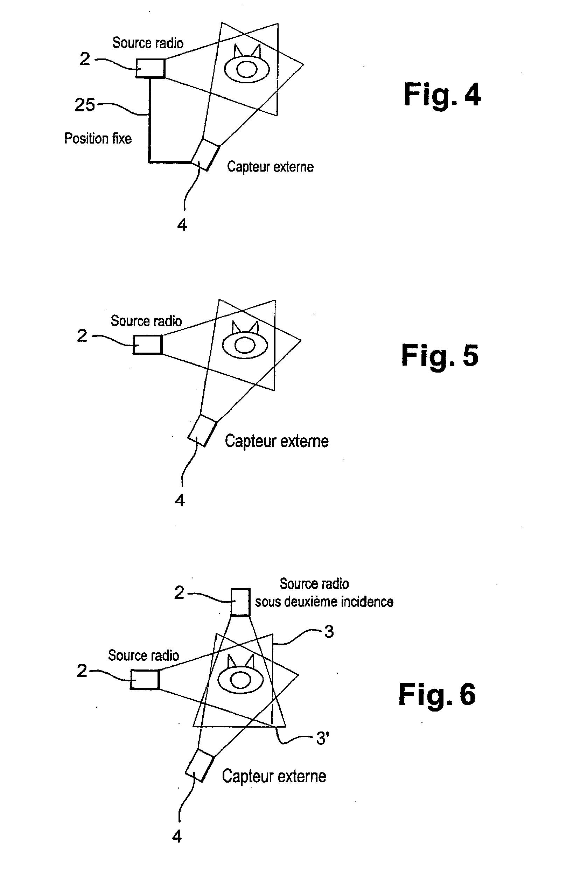

Dans le premier temps, l'opération de recalage 15 intervient pour repositionner la source radio et le plan de l'image radiologique 12 par rapport au capteur de surface 13. Cette opération de recalage 15 se déroule selon trois modalités différentes selon la connaissance que l'on a à priori des positions relatives de la source radio par rapport au capteur de surface 3D (bloc 14 des caractéristiques du matériel radiographique).
- Si le capteur de surface a une position qui reste fixe par rapport à la source radio parce que la source X 2 est solidaire du capteur de surface 4, par exemple par une liaison mécanique 25 comme cela est représenté Figure 4, la position du capteur de surface est alors entièrement déterminée dans le référentiel radio. La position relative de l'acquisition de surface par rapport au plan de l'image radio se déduit (bloc 17) automatiquement sans avoir recours aux repères cutanés.
- Si la position du capteur de surface 4 par rapport à la source radio 2 n'est pas connue à priori, comme cela est représenté sur la figure 5,on utilise alors la position des repères cutanés en 3D sur l'acquisition de surface 13. En simulant leur projection sur un plan radio on peut positionner (bloc 15) la source radio par rapport au capteur de surface, à partir des distances entre les repères sur les radiographies réelles 12 et leurs projections sur le plan de l'image radiologique.
- Si la position du capteur de surface n'est pas connue et l'incertitude de positionnement des repères sur les radios est trop grande pour que la méthode précédente soit valide, alors, comme cela est représenté sur la Figure 6, on prend en compte les deux images radiologiques en supposant qu'il n'y a pas de déformation entre les deux acquisitions d'images radiologiques et que l'incidence relative entre les deux radios est connue (généralement fixée à 90°). On peut alors remonter à un espace 3D radio approché en déterminant les coordonnées 3D des repères cutanés (bloc 12). La comparaison des coordonnées de ces repères cutanés permet alors de déterminer la position de la source radio par rapport au capteur de surface. Cette approche nécessite alors de considérer ce repositionnement comme faisant parti des données à ajuster dans le processus itératif de la phase de déformation.

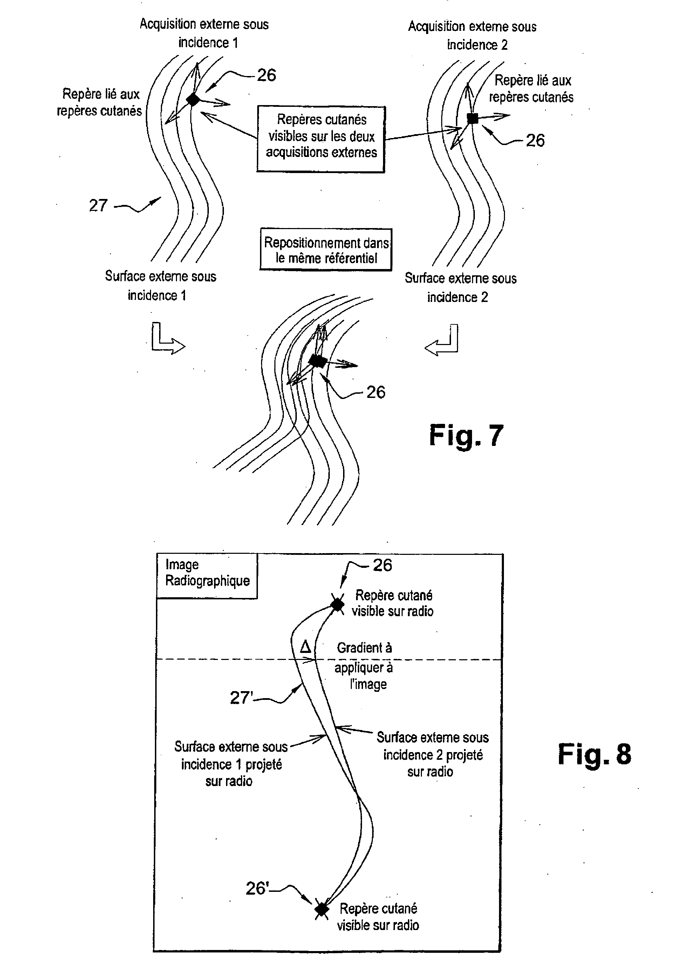

Dans un deuxième temps l'opération de comparaison permet la détermination (bloc 17) du positionnement relatif des deux acquisitions de surface. Dans ce deuxième temps, le positionnement s'obtient à partir des repères cutanés 26 vus sous deux incidences différentes sur les images de surface 3D. Considérant que le sujet ne s'est pas déformé entre les deux prises de vue et connaissant la position de ces repères pour les deux acquisitions de surface, les deux acquisitions d'images de surface sont alors repositionnées dans le même référentiel comme représenté Figure 7. Ce positionnement suppose donc qu'une éventuelle déformation du sujet entre les prises de vue n'affecte que faiblement la position des repères cutanés. Dans une variante plus évoluée, afin de prévenir les effets d'une éventuelle déformation, le positionnement peut s'effectuer en prenant en compte une surface plus importante (repères plus nombreux et/ou répartis sur une plus grande surface) afin de minimiser les risques d'erreurs locales. Sur la Figure 7, les lignes 27 ondulées représentent la surface du sujet telle qu'obtenue avec un capteur du type à franges de Moiré.

Une fois ce positionnement effectué pour les images de surface, les deux images radiologiques sont repositionnées dans le même référentiel 3D, permettant ainsi d'estimer les déformations éventuelles du sujet radiographié.

On va maintenant détailler la seconde phase de calcul de déformation qui comporte plusieurs temps.

Dans un premier temps, à partir des deux acquisitions d'images 3D de surface, la déformation est évaluée en mettant en oeuvre une étape 19 de détermination d'un gradient de déformation. Cette évaluation consiste à superposer au mieux les repères cutanés des deux acquisitions d'images de surface suite au repositionnement de la phase de calcul d'incidence 10. Puis, on quantifie les déformations 3D qui apparaissent sur les images de surface, en privilégiant les zones d'intérêt, c'est-à-dire les zones proches des structures internes étudiées. On obtient pour chaque pixel de ou des zone(s) d'intérêt(s) un gradient de déformation 3D, c'est-à-dire une direction, un sens et une intensité dans l'espace permettant de passer d'un premier objet 3D à ce même objet 3D mais déformé.

Ce gradient de déformation est ensuite projeté dans le plan radiographique d'une des radiographies de manière à obtenir un gradient de déformation 2D. Ce gradient de déformation 2D est alors appliqué (étape 21), en sens inverse, aux pixels de l'image radiographique, c'est-à-dire que l'interprétation des pixels de l'image radiographique est corrigée en prenant en compte le gradient de déformation calculé. Comme représenté Figure 8, ce gradient 2D est appliqué en sens inverse pour corriger les déformations du sujet radiographié entre les deux prises d'images radiographiques de manière à simuler une radiographie qui vérifierait la non déformation du sujet et obtenir ainsi une stéréo-correspondance. Pour cela, on projette les lignes de surface 27 dans l'espace radio pour former des lignes de surface projetées 27'. On peut ainsi déterminer le gradient Δ à appliquer à l'image radiologique. Les repères radio-opaques 26 et 26' sont visibles sur l'image radiologique.

On doit noter que si, pour l'opération de recalage de la première phase de calcul d'incidence, la position du capteur de surface n'est pas connue et l'incertitude de positionnement des repères sur les radios est trop grande, et que l'on effectue le recalage selon la troisième modalité indiquée précédemment, on prend alors en compte les deux radiographies en supposant qu'il n'y a pas de déformation entre les deux images radiologiques et que l'incidence relative est connue. Il est alors nécessaire de reboucler la phase de calcul de déformation et de calcul d'incidence. En effet, la radiographie étant éventuellement déformée, les repères pris sur celle-ci pour le calcul d'incidence ne sont plus corrects. Il faut donc réajuster le calcul d'incidence en prenant en compte la radio déformée. Ce réajustement se fait au travers d'une boucle itérative reprenant le calcul d'incidence et le calcul de déformation à partir des nouvelles radiographies déformées. Sur ces radiographies, les positions des repères cutanés visibles sur les radiographies ont été modifiées. Le test récursif pour vérifier la cohérence entre la déformation des radiographies et le calcul d'incidence se fait sur la position de ces repères cutanés, entre leur position sur la radiographie et leur position mesurée par le capteur de surface 3D puis projetée sur le plan radiographique correspondant. Comme précédemment indiqué, une fois que l'écart entre ces deux positions est faible, i.e. inférieur à un seuil, on considère que le processus itératif est terminé.

A l'issue du processus décrit ci-dessus, on obtient deux radiographies modifiées qui vérifient les deux conditions de calibrage :
- Les déformations du sujet radiographié entre les deux radiographies sont corrigées,
- La position exacte des deux clichés radiographiques entre eux et par rapport au sujet radiographié est connue dans l'espace, et il est alors possible d'interpréter en 3D les informations lues sur les images radiographiques modifiées.

On comprend que l'exemple donné de mise en oeuvre n'est pas le seul et qu'il est possible de l'adapter à d'autres conditions d'utilisation sans pour autant sortir du cadre général de l'invention definie par les revendications.

Par exemple, la source X et le capteur de surface peuvent se déplacer entre les acquisitions au lieu que ce soit le sujet que l'on déplace.

Par exemple, le capteur de surface peut être disposé avec une direction de prise de vue toujours à 45° de celle de la source radio afin que, même pour des incidences radio latérale et frontale, la majeure partie du dos du sujet (donc des repères) soit sur les images de surface sans nécessiter de bouger le capteur de surface.

Enfin, le procédé peut être affiné en réalisant plus de deux acquisitions, en prenant donc en compte plus de deux images radiologiques, chacune associée à son image de surface.

## Revendications

1. Procédé d'imagerie informatisé permettant une reconstruction tridimensionnelle à partir d'images radiologiques bidimensionnelles d'une zone d'intérêt, dans lequel deux images radiologiques bidimensionnelles d'un sujet sont acquises par un moyen de radiographie (2, 3, 3') couplé à un équipement informatique, les images radiologiques étant prises successivement selon des incidences différentes par rapport au sujet, le sujet ayant pu se déformer entre les acquisitions d'images radiologiques, **caractérisé en ce que** :
- on dispose sur la surface du sujet en relation avec la zone d'intérêt un ensemble de repères (26, 26') de surface détectables par un capteur de surface (4) indépendant du moyen radiographique permettant d'acquérir des images de surface en trois dimensions de la surface du sujet dans l'équipement informatique, les repères de surface étant radio-opaques pour être également visibles sur les images radiologiques acquises,
- on associe à chaque image radiologique (3, 3') acquise une image de surface correspondante acquise au même instant ou quasi au même instant afin que le sujet n'ait pas le temps de bouger ou de se déformer,
- on met en oeuvre un processus itératif comportant une phase de calcul d'incidence (10) et une phase de calcul de déformation (11) la phase de calcul d'incidence étant destinée à déterminer (15) les positions relatives des images radiologiques et des images de surface ainsi qu'à effectuer un positionnement spatial (16) des images radiologiques en supposant une absence de déformation du sujet,
la phase de calcul de déformation étant destinée à déterminer (19) et corriger (21) l'interprétation des images radiologiques pour prendre en compte les déformations du sujet pour les positions relatives déterminées dans la phase de calcul d'incidence,
et **en ce que** le critère d'arrêt de l'itération est basé sur l'écart (23) entre les coordonnées 3D de mêmes repères entre deux itérations successives, c'est à dire une itération précédente i-1 et une itération courante i, les coordonnées 3D courantes des repères d'une itération courante i étant calculées à partir de la détermination d'un gradient de déformation obtenu à partir des deux images de surface acquises, l'application de ce gradient aux images radiologiques de l'itération précédente i-1 pour obtenir des images radiologiques corrigées courantes i puis un calcul des nouvelles coordonnées 3D courantes de repères à partir des images radiologiques corrigées courantes i, les positions des repères de l'itération précédente i-1 correspondant aux positions des repères sur les images de surface acquises initialement, et dans le cas d'une première itération, les images radiologiques de l'itération précédente correspondant aux images radiologiques acquises.

2. Procédé selon la revendication 1 , **caractérisé en ce que** lorsque la position relative du moyen de radiographie d'avec le capteur de surface n'est pas connue à priori, on détermine la position relative du moyen de radiologie d'avec le capteur de surface par projection dans le plan des images radiologiques des coordonnées 3D des repères obtenus sur les images de surface et comparaison avec les coordonnées réelles desdits mêmes repères radio-opaques sur les images radiologiques.

3. Procédé selon la revendication 2, **caractérisé en ce que** lorsque la projection dans le plan des images radiologiques des coordonnées 3D des repères n'est pas possible, on détermine la position relative du moyen de radiologie d'avec le capteur de surface par ajustement itératif au cours de la phase de calcul de déformation.

4. Procédé selon l'une quelconque des revendications précédentes, **caractérisé en ce que** le capteur de surface peut être un capteur optique du type franges de Moiré permettant un calcul de relief à partir de projection de lumière structurée sur la surface étudiée, ou un capteur par palpation de la surface dans la mesure ou le sujet ne peut pas bouger entre l'acquisition radio et l'acquisition de surface.

5. Procédé selon l'une quelconque des revendications précédentes, **caractérisé en ce qu'**un des repères de surface possède deux longueurs graduées.

6. Procédé selon l'une quelconque des revendications précédentes, **caractérisé en ce que**, lorsque la zone d'intérêt est le rachis, on dispose un repère de surface vers le haut du rachis, un repère de surface vers le bas du rachis et un troisième repère de surface du type réglette radio-visible, et **en ce que** l'on obtient des images radiologiques selon deux incidences différentes, de préférence, face et profil du sujet.

7. Procédé selon l'une quelconque des revendications précédentes, **caractérisé en ce que** l'on déplace en rotation le sujet pour obtenir les différentes incidences, le moyen de radiographie restant fixe.

8. Procédé selon l'une quelconque des revendications 1 à 6, **caractérisé en ce que** l'on déplace le moyen de radiographie autour du sujet qui reste fixe.

9. Dispositif d'imagerie informatisé adapté pour la mise en oeuvre d'une reconstruction tridimensionnelle à partir d'images radiologiques bidimensionnelles d'une zone d'intérêt, dans lequel deux images radiologiques bidimensionnelles d'un sujet sont acquises par un moyen de radiographie, les images radiologiques étant prises successivement selon des incidences différentes par rapport au sujet, le sujet ayant pu se déformer entre les acquisitions d'images radiologiques, **caractérisé en ce qu'**il comporte des moyens adaptés pour la mise en oeuvre du procédé de l'une quelconque des revendications précédentes.

10. Dispositif d'imagerie informatisé selon la revendication 8, **caractérisé en ce qu'**il comporte des moyens permettant d'obtenir le relief de la surface externe de la partie radiographiée recalé dans l'espace par rapport au plan radiographique.

## Claims

1. Computerized imaging method for a three-dimensional reconstruction from two-dimensional radiological images of an area of interest, in which two two-dimensional radiological images of a subject are acquired through radiographic means (2, 3, 3') coupled to a computer equipment, the radiological images being taken successively from different incidence angles relative to the subject, the subject having possibly been deformed between the radiological image acquisitions, **characterized in that** the following steps are performed:
- disposing on the surface of the subject, in relation with the area of interest, a set of surface reference marks (26, 26') detectable by a surface sensor (4) independent of the radiographic means for acquiring three-dimensional surface images of the subject's surface in the computer equipment, the surface reference marks being radio-opaque to be also visible on the acquired radiological images,
- associating with each acquired radiologic image (3, 3') a corresponding surface image acquired at the same time or at substantially the same time in order the subject has no time to move or to deform her/himself,
- implementing an iterative process comprising a phase of incidence angle calculation (10) and a phase of deformation calculation (11), the phase of incidence angle calculation being intended to determine (15) the relative positions of the radiological images and the surface images as well as to perform a spatial positioning (16) of the radiological images, assuming an absence of deformation of the subject,
the phase of deformation calculation being intended to determine (19) and correct (21) the interpretation of the radiological images to take into account the deformations of the subject for the relative positions determined in the phase of incidence angle calculation,
and **in that** the criterion for stopping the iteration is based on the deviation (23) between the 3D coordinates of same reference marks between two successive iterations, that is a previous iteration i-1 and a current iteration i, the current 3D coordinates of the reference marks of a current iteration i being calculated by determining a deformation gradient obtained from the two acquired surface images, applying this gradient to the radiological images of the previous iteration i-1 to obtain current corrected radiological images i, and then calculating the new current 3D coordinates of reference marks from the current corrected radiological images i, the positions of the reference marks of the previous iteration i-1 corresponding to the positions of the reference marks on the initially acquired surface images, and in the case of a first iteration, the radiological images of the previous iteration corresponding to the acquired radiological images.

2. Method according to claim 1, **characterized in that**, when the relative position of the radiography means with respect to the surface sensor is not known a priori, the relative position of the radiology means with respect to the surface sensor is determined by projection onto the plane of the radiological images of the reference mark 3D coordinates obtained on the surface images, and comparison with the real coordinates of of the same radio-opaque reference marks on the radiological images.

3. Method according to claim 2, **characterized in that**, when the projection onto the plane of the radiological images of the reference mark 3D coordinates is not possible, the relative position of the radiological means with respect to surface sensor is obtained by iterative adjustment during the phase of deformation calculation.

4. Method according to any one of the preceding claims, **characterized in that** the surface sensor can be an optical sensor of the "Moiré fringe" type allowing a calculation of relief from projection of structured light onto the studied surface, or a sensor by palpation of the surface insofar as the subject can not move between the X-ray acquisition and the surface acquisition.

5. Method according to any one of the preceding claims, **characterized in that** one of the surface reference marks has two scaled lines.

6. Method according to any one of the preceding claims, **characterized in that**, when the area of interest is the vertebral column, a surface reference mark is placed on the top of the vertebral column, a surface reference mark on the bottom of the vertebral column and a third surface reference mark of the radio-visible type, and **in that** radiological images from two different incidence angles are obtained, preferably, face and profile views of the subject.

7. Method according to any one of the preceding claims, **characterized in that** the subject is rotated to obtain the different incidence angles, the radiography means staying fixed.

8. Method according to any one of claims 1 to 6, **characterized in that** the radiography means are moved around the subject, which stays fixed.

9. Computerized imaging device for a three-dimensional reconstruction from two-dimensional radiological images of an area of interest, in which two two-dimensional radiological images of a subject are acquired through radiography means, the radiological images being taken successively from different incidence angles relative to the subject, the subject having possibly been deformed between the radiological image acquisitions, **characterized in that** it comprises means adapted for executing the method according to any one of the preceding claims.

10. Computerized imaging device according to claim 9, **characterized in that** it comprises means for obtaining the external relief of the radiographed part, resectioned in the space relative to the radiographic plane.

## Patentansprüche

1. Computergestütztes Bildaufnahmevertahren, das eine dreidimensionale Rekonstruktion ausgehend von zweidimensionalen Röntgenbildern eines Interessensbereichs erlaubt, bei dem zwei zweidimensionale Röntgenbilder eines Subjekts von einem Röntgenaufnahmemittel (2, 3, 3'), das mit einer EDV-Ausrüstung gekoppelt ist, erfasst werden, wobei die Röntgenbilder nacheinander gemäß unterschiedlichen Einfällen in Bezug zu dem Subjekt aufgenommen werden, wobei sich das Subjekt zwischen den Erfassungen von Röntgenbildern verformen konnte, **dadurch gekennzeichnet, dass**:
- man auf der Oberfläche des Subjekts in Bezug zu dem Interessensbereich eine Einheit von Oberftachenkennzeichnungen (26, 26'), die von einem Oberflächensensor (4), der von dem Röntgenmittel unabhängig ist, erfasst werden können, anordnet, die es erlauben, Oberflachenbilder in drei Dimensionen der oberfläche des Subjekts in der EDV-Ausstattung zu erfassen, wobei die Oberflächenkennzeichnungen strahlenundurchlässig sind, um auch auf den erfassten Röntgenbildern sichtbar zu sein,
- man mit jedem erfassten Röntgenbild (3, 3') ein entsprechendes Oberflächenbild verbindet, das im gleichen oder fast gleichen Augenblick erfasst wurde, damit das Subjekt keine Zeit hat, sich zu bewegen oder sich zu verformen,
- man einen iterativen Prozess umsetzt, der eine Einfallsberechnungsphase (10) und eine Verformungsberechnungsphase (11) aufweist,
wobei die Einfallsberechnungsphase dazu bestimmt ist, die relativen Positionen der Röntgenbilder und der Oberflächenbilder zu bestimmen (15) und eine räumliche Positionierung (16) der Röntgenbilder unter der Annahme eines Fehlens von Verformung des Subjekts auszuführen, wobei die Verformungsberechnungsphase dazu bestimmt ist, die Auslegung der Röntgenbilder zu bestimmen (19) und zu korrigieren (21), um die Verformungen des Subjekts für die in der Einfallsberechnungsphase bestimmten relativen Positionen zu berücksichtigen,
und dass das Kriterium zum Stoppen der Iteration auf einem Unterschied (23) zwischen den 3-D-Koordinaten gleicher Kennzeichnungen zwischen zwei aufeinanderfolgenden Iterationen beruht, das heißt, eine vorhergehende Iteration i-1 und eine aktuelle Iteration i, wobei die aktuellen 3-D-Koordinaten der Kennzeichnungen einer aktuellen Iteration i ausgehend von der Bestimmung eines Verformungsgradienten berechnet werden, der ausgehend von den zwei erfassten Oberflächenbildern erhalten wird, Anwendung dieses Gradienten an die Röntgenbilder der vorhergehenden iteration i-1 zum Erhalten der korrigierten aktuellen Röntgenbilder i, danach eine Berechnung der neuen aktuellen 3-D-Koordinaten von Kennzeichnungen ausgehend von den aktuellen korrigierten Röntgenbildern i, wobei die Positionen der Kennzeichnungen der vorhergehenden Iteration i-1 den Positionen der Kennzeichnungen auf den ursprünglich erfassten Oberflächenbildern entsprechen, und in dem Fall einer ersten Iteration, die Röntgenbilder der vorhergehenden Iteration den erfassten Röntgenbildern entsprechen.

2. Verfahren nach Anspruch 1, **dadurch gekennzeichnet, dass** man, wenn die relative Position des Röntgenaufnahmemittels zum Oberflächensensor nicht vorab bekannt ist, die relative Position des Röntgenaufnahmemittels zu dem Oberflächensensor durch Projizieren in der Ebene der Röntgenbilder der 3-D-Koordinaten der erhaltenen Kennzeichnungen auf die Oberflächenbilder und Vergleichen mit den tatsächlichen Koordinaten der gleichen strahlenundurchlässigen Kennzeichnungen auf den Röntgenbildern bestimmt.

3. Verfahren nach Anspruch 2, **dadurch gekennzeichnet, dass** man, wenn die Projektion in der Ebene der Röntgenbilder der 3-D-Koordinaten der Kennzeichnungen nicht möglich ist, die relative Position des Röntgenaufnahmemittels zu dem Oberflächensensor durch iteratives Anpassen im Laufe der Verformungsberechnungsphase bestimmt.

4. Verfahren nach einem der vorhergehenden Ansprüche, **dadurch gekennzeichnet, dass** der Oberflächensensor ein optischer Sensor des Moiréstreifentyps sein kann, der eine Reliefberechnung ausgehend von der Projektion strukturierten Lichts auf die untersuchte Oberfläche erlaubt, oder ein Abtastsensor der Oberfläche, insofern als sich das Subjekt zwischen der Röntgenerfassung und der Oberflächenerfassung nicht bewegen kann.

5. Verfahren nach einem der vorhergehenden Ansprüche, **dadurch gekennzeichnet, dass** eine der Oberflächenkennzeichnungen zwei skalierte Längen besitzt.

6. Verfahren nach einem der vorhergehenden Ansprüche, **dadurch gekennzeichnet, dass** man, wenn der Interessensbereich die Wirbelsäule ist, eine Oberflächenkennzeichnung oben an der Wirbelsäule anordnet, Oberflächenkennzeichnung unten an der Wirbelsäule und eine dritte Oberflächenkennzeichnung des Typs Lineal, das im Röntgenbild sichtbar ist, und dass man Röntgenbilder gemäß zwei unterschiedlichen Einfällen erzielt, vorzugsweise die Vorderseite und das Profil des Subjekts.

7. Verfahren nach einem der vorhergehenden Ansprüche, **dadurch gekennzeichnet, dass** man das Subjekt in Drehung bewegt, um unterschiedliche Einfälle zu erhalten, wobei das Röntgenaufnahmemittel stationär bleibt.

8. Verfahren nach einem der Ansprüche 1 bis 6, **dadurch gekennzeichnet, dass** man das Röntgenaufnahmemittel um das Subjekt, das stationär bleibt, bewegt.

9. Computergestützte Bildaufnahmevorrichtung, die für das Umsetzen einer dreidimensionalen Rekonstruktion ausgehend von zweidimensionalen Röntgenbildern ein Interessensbereichs angepasst ist, bei der zwei zweidimensionale Röntgenbilder eines Subjekts durch ein Rönigenaufnahmemittel erfasst werden, wobei die Röntgenbilder nacheinander gemäß unterschiedlichen Einfällen in Bezug zu dem Subjekt aufgenommen werden, wobei sich das Subjekt zwischen den Röntgenbilderfassungen verformen konnte, **dadurch gekennzeichnet, dass** sie Mittel aufweist, die für das Umsetzen des Verfahrens nach einem der vorhergehenden Ansprüche angepasst sind.

10. Computergestützte Bildaufnahmevorrichtung nach Anspruch 8, **dadurch gekennzeichnet, dass** sie Mittel aufweist, die es erlauben, das Relief er äußeren Oberfläche des mit Röntgenstrahlen durchleuchteten Teils im Raum in Bezug zu der Röntgenebene neu eingestellt zu erhalten.
